# EUROPÄISCHE PATENTSCHRIFT

(11) **EP 0 549 044 B1**
(45) Veröffentlichungstag und Bekanntmachung des Hinweises auf die Patenterteilung: **01.09.1999**
(21) Anmeldenummer: 92203928.4
(22) Anmeldetag: 15.12.1992
(51) Int. Cl.: H04N 3/233, H04N 3/237

(54) **Schaltung zur H-Ablenkung für Fernsehbild-Wiedergabegeräte**
Horizontal deflection circuit for television receiver
Circuit de déflexion horizontale pour récepteur de télévision

(30) Priorität: 21.12.1991 DE 4142651
(43) Veröffentlichungstag der Anmeldung: 30.06.1993
(73) Patentinhaber: Philips Broadcast Television Systems GmbH, 64347 Griesheim (DE); Koninklijke Philips Electronics N.V., 5621 BA Eindhoven (NL)
(72) Erfinder: van den Herik, Florus Bernardus, NL-4907 Oosterhout (NL)
(74) Vertreter: Steenbeek, Leonardus Johannes

(56) Entgegenhaltungen:
- EP-A- 0 240 141
- US-A- 4 501 995
- US-A- 4 761 586
- PATENT ABSTRACTS OF JAPAN vol. 12, no. 420 (E-679)(3267) 8. September 1988 & JP-A-63 157 568 ( MITSUBISHI ELECTRIC CORP )
- PATENT ABSTRACTS OF JAPAN vol. 12, no. 420 (E-679)(3267) 8. September 1988 & JP-A-63 157 568 ( MITSUBISHI ELECTRIC CORP )

## Beschreibung

Die Erfindung geht aus von einer Schaltung zur H-Ablenkung für Fernsehbild-Wiedergabegeräte mit Korrektur des Tangensfehlers gemäß dem Oberbegriff des Patentanspruchs 1.

Bekanntlich führt die Geometrie der Bildröhre zu einer nichtlinearen Verzerrung des Abtastrasters nahe dem Beginn und Ende der horizontal-Abtastzeile. Zur Korrektur dieser Nichtlinearität ist normalerweise ein kondensator in Reihe mit den Horizontal-Ablenkspulen geschaltet. Dieser zur Korrektur des Tangensfehlers dienende sogenannte S-Korrektur-Kondensator lädt sich während eines Teiles des horizontal-Ablenkintervalls auf und entlädt sich während eines anderen Teils, so daß der Horizontal-Ablenkstrom S-förmig abgewandelt wird und die Ablenkung linear erfolgt.

Um bei unterschiedlichen Normen, d.h. Ablenkfrequenzen, ein gewünschtes Ausmaß an S-Formung zu erreichen, ist es bekannt, (zum Beispiel DE 34 19 930 und US-A-4, 501,955), zu diesem S-Korrektur-Kondensator einen weiteren Kondensator in Reihe oder parallel dazu wahlweise einzuschalten. Außerdem ist es aus der EP 0 146 345 bekannt, bei Wiedergaberöhren mit besonders großen Ablenkwinkeln bzw. komplexen Bildschirmformen eine Verbesserung der S-Korrektur durch zeitweises Zuschalten während der H- oder V-Ablenkung eines weiteren Kondensators zu erzielen. Nachteilig dabei ist, daß für das Zu- bzw. Abschalten des weiteren Kondensators eine entsprechende Schaltung zusätzlich vorgesehen werden muß.

Der vorliegenden Erfindung liegt daher die Aufgabe zugrunde, eine verbesserte Schaltung zur H-Ablenkung mit stufenlos einstellbarer S-Korrektur des Ablenkstromes anzugeben.

Diese Aufgabe soll mit den im Kennzeichen des Patentanspruches 1 angegebenen Merkmalen gelöst werden.

Die erfindungsgemäße Schaltung mit den kennzeichnenden Merkmalen des Hauptanspruchs hat den Vorteil, daß damit die unterschiedlichen S-Formen der Ablenkströme von Multinorm-Fernsehbild-Wiedergabegeräten erzeugbar sind. Als weiterer Vorteil ist anzusehen, daß auch die Verwendung von unterschiedlichen Bildschirm-Dimensionen keine Änderung der Schaltung erforderlich macht.

Ein Ausführungsbeispiel der Erfindung ist in der Zeichnung dargestellt und in der nachfolgenden Beschreibung näher erläutert. Es zeigen:
Fig. 1 eine erfindungsgemäß H-Ablenkschaltung,
Fig. 2 eine Variante der Erfindung.

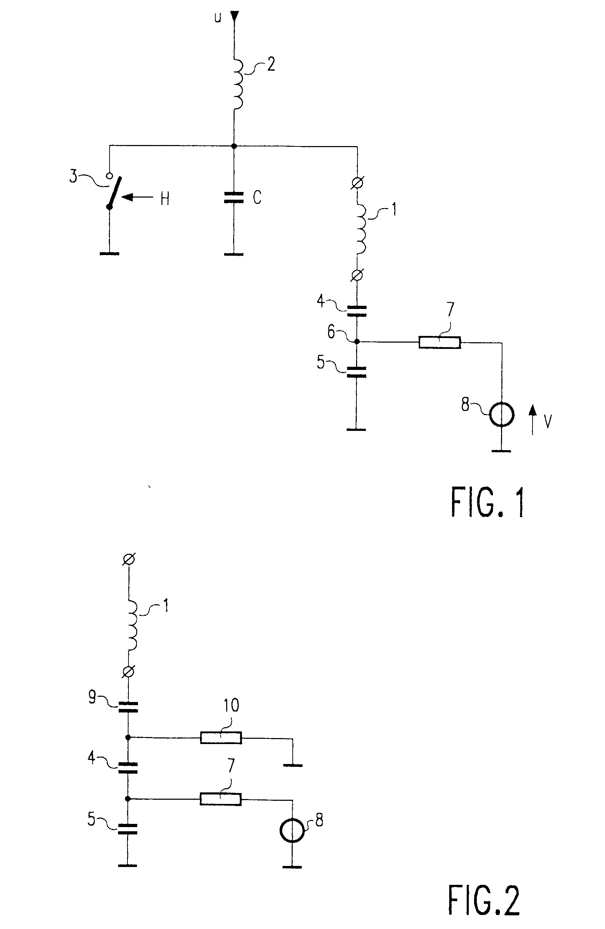

Die Fig. 1 zeigt nur die zur Erklärung der Erfindung notwendigen Teile einer H-Ablenkschaltung für Fernseh-Wiedergabegeräte. Die H-Ablenkspule 1 wird von einem Strom aus der Betriebsspannungsquelle U über eine Spule 2 gespeist. In der Ablenkspule 1 wird durch H-frequente Steuerung eines Schalters 3 in Verbindung mit einem Rücklaufkondensator C ein H-frequenter Ablenkstrom erzeugt.

Zur S-Verformung des H-Ablenkstromes ist nun in Reihe mit der H-Ablenkspule 1 eine Reihenschaltung aus zwei Teilkondensatoren 4 und 5 an Masse geschaltet. Diese beiden Teilkondensatoren 4 und 5 haben dabei eine Kapazität eines S-Korrektur-Kondensators für normale oder übliche Ablenkfrequenz. Zumindest der Teilkondensator 5 weist erfindungsgemäß ein gleichspannungsabhängiges Dielektrikum auf. An den Verbindungspunkt 6 dieser Teilkondensatoren 4 und 5 ist über einen Widerstand 7 eine einstellbare Gleichspannungsquelle 8 angeschlossen. Bei Veränderung der von der Quelle 8 gelieferten Gleichspannung verändert sich somit auch die Kapazität zumindest des einen Teilkondensators 5 (s. beispielsweise Ceramic Multilayer Capacitors X7R von Philips). Selbstverständlich können auch beide Teilkondensatoren 4 und 5 ein gleichspannungsabhängiges Dielektrikum haben, so daß sich bei Spannungsänderung die Kapazitäten beider Teilkondensatoren ändern. Um jeden gewünschten Kondensatorwert zu erhalten, können natürlich auch verschieden große Teilkondensatoren mit spannungsabhängigem Dielektrikum parallel geschaltet werden. Damit ist es möglich, in einfacher Weise die S-Verformung durch einstellbare Kapazitätsänderung jeder gewünschten Anwendung bei der H-Ablenkung anzupassen.

Außerdem besteht die Möglichkeit gemäß Fig. 2 in Reihe mit den ein gleichspannungsabhängiges Dielektrikum aufweisenden Teilkondensatoren 4 und 5 zwischen dem Kondensator 4 und die Ablenkspule 1 einen weiteren - nicht notwendigerweise spannungsabhängigen - Kondensator 9 einzusetzen, wobei der Verbindungspunkt der Kondensatoren 4 und 9 über einen Widerstand 10 an Masse gelegt ist. Damit wird erreicht, daß über den Kondensatoren 4 und 5 die gleiche Spannung steht, und somit unerwünschte Verzerrungen vermindert bzw. beseitigt werden.

## Patentansprüche

1. Schaltung zur H-Ablenkung für Fernsehbild-Wiedergabegeräte mit einer in Reihe mit der H-Ablenkspule (1) liegenden Kondensatorschaltung zur Korrektur des Tangensfehlers durch eine S-förmige Verzerrung des Ablenkstromes, dadurch gekennzeichnet, daß diese Kondensatorschaltung eine Reihenschaltung zweier Teilkondensatoren (4, 5) entsprechender Kapazität enthält, von denen mindestens der nich unmittelbar mit der H-Ablenkspule (1) verbundene Kondensator (5) eine durch ein gleichspannungsabhängiges Dielektrikum erreichte gleichspannungsabhangige Kapazität aufweist, und daß am Verbindungspunkt (6) dieser beiden Kondensatoren (4, 5) eine veränderbare Gleichspannung so angelegt ist, daß eine stufenlos einstellbare S-Korrektur erreicht wird.

2. Schaltung nach Anspruch 1, dadurch gekennzeichnet, daß zwischen die h-Ablenkspule (1) und der Reihenschaltung der ein gleichspannungsabhängiges Dielektrikum aufweisenden Teilkondensatoren (4, 5) ein weiterer Kondensator (9) angeordnet ist, und daß der Verbindungspunkt zwischen dem weiteren Kondensator (9) und dem Teilkondensator (4) über einen Widerstand (10) an ein Bezugspotential gelegt is.

## Revendications

1. Circuit de déflexion horizontale pour téléviseur avec un circuit de condensateur monté en série avec la bobine de déflexion horizontale (1) en vue de la correction de l'erreur de tangente par une distorsion en forme de S du courant de déflexion, caractérisé en ce que ce circuit de condensateur contient un montage en série de deux condensateurs partiels (4, 5) de capacité correspondante dont au moins le condensateur (5) qui n'est pas relié directement à la bobine de déflexion horizontale (1) présente une capacité dépendant de la tension continue atteinte par un diélectrique dépendant d'une tension continue et qu'au point de jonction (6) de ces deux condensateurs (4, 5), une tension continue variable est appliquée de telle sorte qu'une correction S réglable en continu soit obtenue.

2. Circuit selon la revendication 1, caractérisé en ce qu'entre la bobine de déflexion horizontale (1) et le montage en série des condensateurs partiels (4, 5) présentant un diélectrique dépendant de la tension continu, il est monté un condensateur (9) supplémentaire et que le point de jonction entre le condensateur supplémentaire (9) et le condensateur partiel (4) est mis à un potentiel de référence par l'intermédiaire d'une résistance (10).

## Claims

1. A circuit for horizontal deflection in television picture display devices, including a capacitor circuit arranged in series with the horizontal deflection coil (1) for correcting the tangential error by means of an S-shaped distortion of the deflection current, characterized in that said capacitor circuit comprises a series arrangement of two sub-capacitors (4, 5) of corresponding capacitance, at least the capacitor (5) which is not directly connected to the horizontal deflection coil (1) having a capacitance which is dependent on the direct voltage and is obtained by a direct voltage-dependent dielectric, and in that the junction point (6) of said two capacitors (4, 5) conveys a variable direct voltage, such that a steplessly adjustable S correction is achieved.

2. A circuit as claimed in claim 1, characterized in that a further capacitor (9) is arranged between the horizontal deflection coil (1) and the series arrangement of sub-capacitors (4, 5) having a direct voltage-dependent dielectric, and in that the junction point between the further capacitor (9) and the sub-capacitor (4) is connected to a reference potential via a resistor (10).
